(19) Europäisches Patentamt
European Patent Office
Office européen des brevets

(11) **EP 3 114 001 B1**

(12) **EUROPÄISCHE PATENTSCHRIFT**

(45) Veröffentlichungstag und Bekanntmachung des Hinweises auf die Patenterteilung:
**07.04.2021 Patentblatt 2021/14**

(21) Anmeldenummer: **15708756.0**

(22) Anmeldetag: **20.02.2015**

(51) Int Cl.:
**B60W 50/14** (2020.01)     **B60W 50/00** (2006.01)

(86) Internationale Anmeldenummer:
**PCT/EP2015/053604**

(87) Internationale Veröffentlichungsnummer:
**WO 2015/132084 (11.09.2015 Gazette 2015/36)**

(54) **VERFAHREN UND VORRICHTUNG ZUR PROGNOSE EINER REICHWEITENVERÄNDERUNG DURCH EIN- ODER AUSSCHALTEN EINER FAHRZEUGFUNKTION EINES FAHRZEUGS**

METHOD AND DEVICE FOR PREDICTING A RANGE CHANGE AS A RESULT OF SWITCHING A VEHICLE FUNCTION OF A VEHICLE ON OR OFF

VERFAHREN UND VORRICHTUNG ZUR PROGNOSE EINER REICHWEITENVERÄNDERUNG DURCH EIN- ODER AUSSCHALTEN EINER FAHRZEUGFUNKTION EINES FAHRZEUGS

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2014 DE 102014203903**

(43) Veröffentlichungstag der Anmeldung:
**11.01.2017 Patentblatt 2017/02**

(73) Patentinhaber: **Volkswagen Aktiengesellschaft 38440 Wolfsburg (DE)**

(72) Erfinder:
• WÄLLER, Christoph
  38196 Braunschweig (DE)
• DOBMANN, Michael
  38442 Wolfsburg (DE)
• BADER, Viktor
  38448 Wolfsburg (DE)

(56) Entgegenhaltungen:
WO-A1-2011/031933      DE-A1-102011 112 382
US-A1- 2012 179 311      US-A1- 2012 179 313
US-A1- 2013 096 818

# EP 3 114 001 B1

**Beschreibung**

Die vorliegende Erfindung betrifft ein Verfahren und eine Vorrichtung zur Prognose einer Reichweitenveränderung durch Ein- oder Ausschalten einer Fahrzeugfunktion eines Fahrzeugs.

Die Reichweite eines Fahrzeugs stellt einen wesentlichen Parameter eines Fahrzeuges dar. Diese lässt sich in der Regel aus dem im Fahrzeug vorhandenen Energievorrat und einem Energieverbrauch diverser Fahrzeugfunktionen bestimmen. Insbesondere bei Fahrzeugen, die einen elektrischen Antrieb aufweisen, spielt die Reichweite eine große Rolle. Denn in der Regel entscheidet der Fahrer über die ihm angezeigte Reichweite darüber, ob er eine Batterie, die den Energievorrat für den Antrieb eines Elektrofahrzeugs speichert, aufladen muss oder nicht. Denn nur mit ausreichender Reichweite ist ein Fahrziel schließlich erreichbar.

Die DE 10 2010 038 539 A1 beschreibt ein Verbrauchsanzeigesystem für ein Fahrzeug. Dabei wird für verschiedene Fahrer ein Energieverbrauch für bestimmte Fahrstrecken bestimmt.

Die DE 10 2009 052 853 A1 beschreibt ein Verfahren zur Reichweitenabschätzung eines Kraftfahrzeuges. Dabei wird von einem Fahrer eine Begrenzung einer maximal zulässigen Fahrgeschwindigkeit, einer maximal zulässigen Beschleunigung und/oder einer maximalen Leistung für das Komfortsystem vorgenommen. Weiterhin werden Fahrstraßenprofile erfasst, die in der Umgebung des Fahrzeugs vorliegen, insbesondere ein Höhenprofil oder eine Straßenkategorie. Eine Recheneinrichtung errechnet anhand der vorgenommenen Begrenzungen, der erfassten Fahrstraßenprofile und der noch vorhandenen Energiemenge eine noch mögliche Reichweite und zeigt diese an.

Bei dem in der DE 10 2011 112382 A1 beschriebenen Verfahren wird die Energiezufuhr für den Antrieb eines Fahrzeugs geregelt. Hierzu wird während des Befahrens einer Route die verfügbare Restenergiemenge für den Antrieb bestimmt und nötigenfalls wird eine Geschwindigkeitsregelung aktiviert. Dabei können ferner interne Verbraucher des Fahrzeugs berücksichtigt werden, insbesondere eine Klimaanlage, deren Energieverbrauch anhand der Umgebungstemperatur abgeschätzt werden kann.

Auch bei den in der US 2012/179311 A1 und US 2012/179313 A1 beschriebenen Verfahren ist vorgesehen, dass der Energieverbrauch eines Fahrzeugs unter Berücksichtigung verschiedener Verbraucher bestimmt wird. Ferner beschreibt die WO 2011/031933 A1 ein Verfahren zur Steuerung eines Hybridfahrzeugs, bei dem anhand von Umgebungsdaten ein Energieverbrauch berechnet und eine Entladungsrate bestimmt wird. Beispielsweise wird anhand der Umgebungstemperatur die zur Klimatisierung erforderliche Energie abgeschätzt. Die US 2013/096818 A1 schließlich beschreibt ein Verfahren zum Abschätzen der Reichweite eines Fahrzeugs anhand verschiedener gemessener und berechneter Größen.

Der vorliegenden Erfindung liegt die Aufgabe zugrunde, ein Verfahren und eine Vorrichtung bereitzustellen, mittels welcher schnell und zuverlässig Reichweitenveränderungen, die durch Ein- oder Ausschalten einzelner Fahrzeugfunktion erzielt werden können, prognostiziert werden können.

Diese Aufgabe wird durch ein Verfahren nach Anspruch 1 und eine Vorrichtung nach Anspruch 10 gelöst. Vorteilhafte Ausgestaltungen und Weiterbildungen sind Gegenstände der abhängigen Ansprüche.

Bei dem erfindungsgemäßen Verfahren wird ein Wert einer im Fahrzeug vorhandenen Energiemenge ermittelt. Ein Wert einer ersten Energiemenge wird prognostiziert, die in einem Grundzustand des Fahrzeugs für eine bestimmte Strecke und/oder Fahrtdauer voraussichtlich verbraucht wird. Dabei wird aus dem prognostizierten Wert der ersten Energiemenge und dem Wert der vorhandenen Energiemenge ein erster Reichweitenwert prognostiziert. Weiterhin wird ein Wert einer zweiten Energiemenge prognostiziert, die verbraucht oder eingespart werden würde, wenn die Fahrzeugfunktion ein- oder ausgeschaltet werden würde. Eine Umgebungstemperatur des Fahrzeugs wird erfasst, wobei die Prognose zumindest des Werts der zweiten Energiemenge von der Umgebungstemperatur des Fahrzeugs abhängig ist. Aus den Werten der vorhandenen Energiemenge, der ersten Energiemenge und der zweiten Energiemenge wird ein zweiter Reichweitenwert prognostiziert, um den der erste Reichweitenwert erhöht oder erniedrigt werden würde, wenn die Fahrzeugfunktion ein- oder ausgeschaltet werden würde. Der zweite Reichweitenwert wird angezeigt.

Durch das erfindungsgemäße Verfahren kann also ein Reichweitenwert prognostiziert werden, um den sich die Reichweite des Fahrzeugs erhöhen würde, wenn eine eingeschaltete Fahrzeugfunktion ausgeschaltet oder eine ausgeschaltete Fahrzeugfunktion eingeschaltet werden würde. Weiterhin kann auch ein Reichweitenwert prognostiziert werden, um den sich die Reichweite des Fahrzeugs erniedrigen würde, wenn eine eingeschaltete Fahrzeugfunktion ausgeschaltet oder eine ausgeschaltete Fahrzeugfunktion eingeschaltet werden würde. Die Anzeige des zweiten Reichweitenwerts soll den Fahrer dazu animieren, die Fahrzeugfunktion tatsächlich ein- oder auszuschalten, um Energie einzusparen. Wird durch ein Ein- oder Ausschalten der Fahrzeugfunktion die Reichweite hingegen verringert, soll der Fahrer davon abgehalten werden, diese ein- oder auszuschalten.

Insbesondere führt es zu einer Reichweitenerhöhung, wenn Funktionen, die zum Energiesparen während dem Fahrzeugbetrieb beitragen, eingeschaltet werden. Solche Funktionen werden auch ECO-Funktionen genannt. Um den Fahrer dazu zu animieren, dass er diese Funktionen freiwillig einschaltet, muss ihm ein direkter Vorteil des Einschaltens der Fahrzeugfunktion vor Augen gehalten werden. Dabei wird der Fahrer eine ECO-Funktion insbesondere dann freiwillig einschalten, wenn ihm eine Reichweitenerhöhung in Aussicht gestellt wird. Dem Fahrer kann auch angezeigt werden, dass ein Ausschalten einer Fahrzeugfunktion dazu führen kann, dass die Reichweite erhöht wird. Er soll also in diesem Fall dazu animiert werden, die Fahrzeugfunktion auszuschalten.

Im umgekehrten Fall kann das Einschalten einer Funktion dazu führen, dass die Reichweite verringert werden würde, oder dass durch das Ausschalten einer Fahrzeugfunktion eine Reichweite erhöht werden würde. Auch dies wird dem Fahrer angezeigt, so dass dieser darüber nachdenkt, ob das Einschalten der Funktion tatsächlich notwendig ist.

Die erste Energiemenge, die in einem Grundzustand des Fahrzeugs verbraucht wird, stellt dabei den Grundverbrauch des Fahrzeugs dar. Diesen kann der Fahrer beispielsweise nicht direkt über Zu- oder Abschalten einer Funktion beeinflussen. Vielmehr wird dadurch der Energieverbrauch beschrieben, der durch den Antrieb des Fahrzeugs oder durch den Energieverbrauch der Fahrzeugelektronik zustande kommt. Der Grundzustand des Fahrzeugs stellt demnach den Zustand des Fahrzeugs dar, in dem das Fahrzeug ohne Komfortfunktionen oder Entertainmentsysteme betrieben wird. Der Grundverbrauch kann allerdings auch derart definiert werden, dass er einen Energieverbrauch in einem vom Fahrer bevorzugten Komfortzustand berücksichtigt. Insbesondere wird dann ein Energieverbrauch berücksichtigt, der durch eine bevorzugte Fahrweise des Fahrers hervorgerufen wird. Dabei werden dann bevorzugte Standardeinstellungen der Klimaanlage oder anderer Fahrzeugfunktionen berücksichtigt.

Das erfindungsgemäße Verfahren ist dadurch gekennzeichnet, dass der Wert der zweiten Energiemenge über die Näherungsfunktion

$$(1) \qquad E_2 = a_3 T^2 + a_4 T + a_5$$

prognostiziert wird, wobei $a_3$, $a_4$ und $a_5$ Parameter der Näherungsfunktion sind, die spezifisch für die Fahrzeugfunktion sind, und T die Umgebungstemperatur des Fahrzeugs ist. Die Parameter $a_3$, $a_4$ und $a_5$ können dabei insbesondere schon im Voraus in einem Referenzfahrzeug für jede Fahrzeugfunktion bestimmt worden sein. Diese Parameter werden dann nur noch in das Polynom (2) für die entsprechende Fahrzeugfunktion eingesetzt. Der Wert der zweiten Energiemenge kann so über ein einfaches Polynom zweiten Grades bestimmt werden. Die Berechnungszeiten für ein solches Polynom bewegen sich im ms-Bereich, so dass der Wert der zweiten Energiemenge schnell und für den Fahrer nahezu verzögerungsfrei zur Verfügung steht.

In einer Ausgestaltung wird der Wert der ersten Energiemenge über die Näherungsfunktion

$$(2) \qquad E_1 = a_0 T^2 + a_1 T + a_2$$

prognostiziert. Weiterhin kann die vorhandene Energiemenge in einer Batterie gespeichert sein und der Wert der vorhandenen Energiemenge über die Näherungsfunktion

$$(3) \qquad E_{bat} = SOC * E_{kap}$$

abgeschätzt werden. Dabei sind $a_0$, $a_1$ und $a_2$ Parameter der Näherungsfunktion, die spezifisch für den Grundzustand sind. Auch die Parameter $a_0$, $a_1$ und $a_2$ können im Voraus in einem Referenzfahrzeug für unterschiedliche Umgebungstemperaturen bestimmt und bei Bedarf in die Näherungsfunktion eingesetzt werden. T ist die Umgebungstemperatur des Fahrzeugs, SOC ist der Ladezustand der Batterie und $E_{kap}$ ist die Nennkapazität der Batterie. Die Nennkapazität ist eine vom Hersteller der Batterie angegebene Kapazität, die speziell für die verwendete Batterie unter kontrollierten Bedingungen ermittelt wurde.

Zudem ist in dieser Ausgestaltung auch die erste Energiemenge lediglich von der Umgebungstemperatur abhängig. Dies ist besonders vorteilhaft, da dann lediglich ein Parameter aus der Umgebung des Fahrzeugs erfasst werden muss, der für die gesamte Prognose verwendet wird. Auch die Dauer für die Prognose der ersten Energiemenge liegt daher im ms-Bereich. Außerdem ist eine Prognose, die nur von der Umgebungstemperatur abhängt, ausreichend genau, um eine zuverlässige Prognose der Reichweitenveränderung abzugeben.

Insbesondere wird der erste Reichweitenwert aus dem Wert der vorhandenen Energiemenge und dem prognostizierten Wert der ersten Energiemenge über die Gleichung

$$(4) \qquad RW_1 = E_{bat} / E_1$$

prognostiziert und/oder ein dritter Reichweitenwert wird aus dem Wert der vorhandenen Energiemenge, dem prognostizierten Wert der ersten Energiemenge und dem prognostizierten Wert der zweiten Energiemenge über die Gleichung

$$(5) \qquad RW_3 = E_{bat}/(E_1 + E_2)$$

prognostiziert. Dabei gibt der dritte Reichweitenwert die Reichweite an, die erreicht werden würde, wenn die Fahrzeugfunktion ein- oder ausgeschaltet werden würde. Bei dem dritten Reichweitenwert handelt es sich also nicht um eine Reichweitenveränderung, sondern um eine Gesamtreichweite, die erreichbar ist, wenn die Fahrzeugfunktion ein- oder ausgeschaltet wird. Der zweite Reichweitenwert, um den der erste Reichweitenwert erhöht bzw. erniedrigt wird, also die Reichweitenveränderung, kann dann einfach durch Differenzbildung zwischen dem ersten Reichweitenwert und dem dritten Reichweitenwert ermittelt werden.

In einer weiteren Ausgestaltung wird der zweite Reichweitenwert über eine erste Näherungsfunktion einer ersten Genauigkeit prognostiziert. Wenn eine Dauer zur Prognose für den zweiten Reichweitenwert eine vorgegebene Zeitspanne übersteigt, wird der zweite Reichweitenwert zunächst über eine zweite Näherungsfunktion mit einer zweiten Genauigkeit prognostiziert, wobei die zweite Genauigkeit geringer ist als die erste Genauigkeit. Der mit der zweiten Näherungsfunktion prognostizierte zweite Reichweitenwert wird angezeigt. Der angezeigte zweite Reichweitenwert wird durch den mit der zweiten Näherungsfunktion berechneten zweiten Reichweitenwert ersetzt, wenn die Prognose mit der zweiten Näherungsfunktion beendet ist.

Bei modellbasierten Berechnungen werden insbesondere mehrere Parameter aus der Fahrzeugumgebung und/oder dem Fahrzeuginnenraum verwendet, um eine möglichst genaue Prognose der Energiemengen und dadurch der Reichweiten erstellen zu können. Um eine hohe Genauigkeit bei der Prognose zu erzielen, können neben der Umgebungstemperatur noch weitere Parameter aus der Fahrzeugumgebung oder dem Innenraum des Fahrzeugs berücksichtigt werden, beispielsweise Sonneneinstrahlung, Feuchtigkeit oder ein Fahrstreckenprofil. Werden weitere Parameter bei der Prognose berücksichtigt, kann dies jedoch dazu führen, dass sich die Prognosedauer erheblich erhöht. Diese kann dann in einem Bereich von 2 bis 10 Sekunden liegen. Da der Fahrer jedoch dazu animiert werden soll, eine ECO-Funktion zu verwenden, sollten ihm die nötigen Informationen zur Reichweitenerhöhung oder -verringerung schnell angezeigt werden. Um den Fahrer nicht zu lange auf das Ergebnis warten zu lassen, kann demnach eine vorübergehende Prognose mit einer Näherungsfunktion einer geringeren Genauigkeit getätigt werden. Dabei kann die zweite Näherungsfunktion mit geringerer Genauigkeit für die erste und zweite Energiemenge ein Polynom gemäß den Formeln (1) und (2) sein.

Insbesondere wird ermittelt, ob ein Ziel einer Fahrtstrecke erreichbar wäre, wenn die Fahrzeugfunktion ein- oder ausgeschaltet werden würde. Wenn ermittelt wird, dass das Ziel der Fahrtstrecke durch Ein- oder Ausschalten der Fahrzeugfunktion erreichbar wäre, wird ein graphisches Element angezeigt. Das graphische Element zeigt dem Fahrer dann an, dass sein Fahrziel erreichbar wäre, wenn er die Fahrzeugfunktion ein- bzw. ausschaltet. Dadurch kann der Anreiz, eine energiesparende Funktion einzuschalten, oder eine Fahrzeugfunktion mit hohem Energieverbrauch auszuschalten, erhöht werden.

In einer anderen Ausgestaltung weist das Fahrzeug mehrere Fahrzeugfunktionen auf, mittels welchen der erste Reichweitenwert veränderbar ist. Für jede der mehreren Fahrzeugfunktionen wird der zweite Reichweitenwert prognostiziert und angezeigt. Dadurch bekommt der Fahrer einen Überblick über die im Fahrzeug vorhandenen Fahrzeugfunktionen sowie deren Auswirkungen auf die Reichweite des Fahrzeugs.

Insbesondere wird zumindest eine der mehreren Fahrzeugfunktionen ein- oder ausgeschaltet. Der Einfluss der ein- bzw. ausgeschalteten Funktion auf die zweiten Reichweitenwerte für andere Fahrzeugfunktionen wird ermittelt. Die zweiten Reichweitenwerte werden in Abhängigkeit von dem Einfluss der ein- bzw. ausgeschalteten Fahrzeugfunktion neu prognostiziert. Die neu prognostizierten zweiten Reichweitenwerte werden angezeigt. Dies ist insbesondere dann vorteilhaft, wenn sich die Auswirkungen des Ein- oder Ausschaltens der Fahrzeugfunktion nicht auf einfache additive Weise auf die zweiten Reichweitenwerte der anderen Fahrzeugfunktionen auswirken.

Bevorzugt werden die zweiten Reichweiten der Fahrzeugfunktionen der Größe nach absteigend sortiert und die sortierten zweiten Reichweitenwerte werden in einer Liste angezeigt. Dadurch wird dem Fahrer sofort klar, welche Fahrzeugfunktionen den größten Einfluss auf eine Erhöhung oder Verringerung des ersten Reichweitenwerts hätten.

Ferner betrifft die Erfindung eine Vorrichtung zur Prognose einer Reichweitenveränderung durch Ein- oder Ausschalten einer Fahrzeugfunktion eines Fahrzeugs, wobei das Fahrzeug zumindest eine Fahrzeugfunktion aufweist, die ein- und/oder ausschaltbar ist. Die Vorrichtung umfasst eine Ermittlungseinheit, mittels welcher ein Wert einer im Fahrzeug vorhandenen Energiemenge ermittelbar ist. Zudem umfasst die Vorrichtung eine Temperaturmesseinheit, mittels welcher die Umgebungstemperatur des Fahrzeugs erfassbar ist. Weiterhin umfasst die Vorrichtung eine Prognoseeinheit, mittels welcher ein Wert einer ersten Energiemenge prognostizierbar ist, die in einem Grundzustand des Fahrzeugs für eine bestimmte Strecke und/oder Fahrtdauer voraussichtlich verbraucht wird, wobei aus dem prognostizierten Wert der ersten Energiemenge und dem Wert der vorhandenen Energiemenge ein erster Reichweitenwert prognostizierbar ist. Die Prognoseeinheit kann ferner einen Wert einer zweiten Energiemenge prognostizieren, die verbraucht oder eingespart werden würde, wenn die Fahrzeugfunktion ein- oder ausgeschaltet werden würde, wobei der Wert der zweiten Energiemenge in Abhängigkeit von der Umgebungstemperatur prognostizierbar ist. Aus den Werten der vorhandenen Energiemenge, der ersten Energiemenge und der zweiten Energiemenge ist mit der Prognoseeinheit ein zweiter Reichweitenwert prognostizierbar, um den der erste Reichweitenwert erhöht oder erniedrigt wird, wenn die Fahrzeugfunktion ein- oder ausgeschaltet werden würde. Die Vorrichtung umfasst außerdem eine Anzeigevorrichtung und eine Steuervorrichtung, mittels welcher die Anzeigevorrichtung derart ansteuerbar ist, dass die zweiten Reichweitenwerte auf der Anzeigevorrichtung anzeigbar sind.

Die erfindungsgemäße Vorrichtung ist dadurch gekennzeichnet, dass der Wert der zweiten Energiemenge $E_2$ über die Näherungsfunktion

$$E_2 = a_3 T^2 + a_4 T + a_5$$

prognostizierbar ist, wobei $a_3$, $a_4$ und $a_5$ Parameter der Näherungsfunktion sind, die spezifisch für die Fahrzeugfunktion sind, und T die Umgebungstemperatur des Fahrzeugs ist.

Die Vorrichtung ist insbesondere zum Ausführen des erfindungsgemäßen Verfahrens geeignet und weist daher alle Vorteile des erfindungsgemäßen Verfahrens auf.

Insbesondere umfasst die Vorrichtung eine Batterie, in der die vorhandene Energiemenge gespeichert ist.

Ferner betrifft die Erfindung ein Fahrzeug mit einem Elektromotor und einer erfindungsgemäßen Vorrichtung. Bei dem Fahrzeug kann es sich demnach um ein Fahrzeug handeln, dessen Antriebsenergie zumindest zu einem Teil aus elektrischer Energie gespeist wird. Es kann sich demnach um ein Hybridfahrzeug handeln, bei dem ein Teil der Energie aus einer Batterie gespeist wird. Es kann sich aber auch um eine Elektrofahrzeug handeln, das seine Energie nur aus einer Batterie bezieht.

Im Folgenden wird die Erfindung anhand von Ausführungsbeispielen mit Bezug zu den Zeichnungen erläutert.

Figur 1            zeigt ein Ausführungsbeispiel der erfindungsgemäßen Vorrichtung,

Figur 2            zeigt ein Beispiel einer Anordnung der erfindungsgemäßen Vorrichtung in einem Fahrzeug mit einem Elektromotor,

Figuren 3a bis 3e  zeigen beispielhafte Kurvenverläufe der ersten Energiemenge, der zweiten Energiemenge, der Summe aus erster und zweiter Energiemenge, des dritten Reichweitenwerts und des zweiten Reichweitenwerts in Abhängigkeit von der Umgebungstemperatur des Fahrzeugs,

Figur 4            zeigt ein Flussdiagramm für ein erstes Ausführungsbeispiel des erfindungsgemäßen Verfahrens,

Figuren 5a und 5b  zeigen die Anzeige auf einer Anzeigefläche, wie sie von dem ersten Ausführungsbeispiel des Verfahrens erzeugt werden,

Figuren 6a und 6b  zeigen, wie sich die Anzeige auf der Anzeigefläche verändert, wenn eine Fahrzeugfunktion eingeschaltet wird,

Figuren 7a bis 7c  zeigen Anzeigen auf einer Anzeigefläche, wie sie von einem zweiten Ausführungsbeispiels des Verfahrens erzeugt werden, und

Figur 8            zeigt eine Anzeige auf einer Anzeigefläche gemäß einem dritten Ausführungsbeispiel des erfindungsgemäßen Verfahrens.

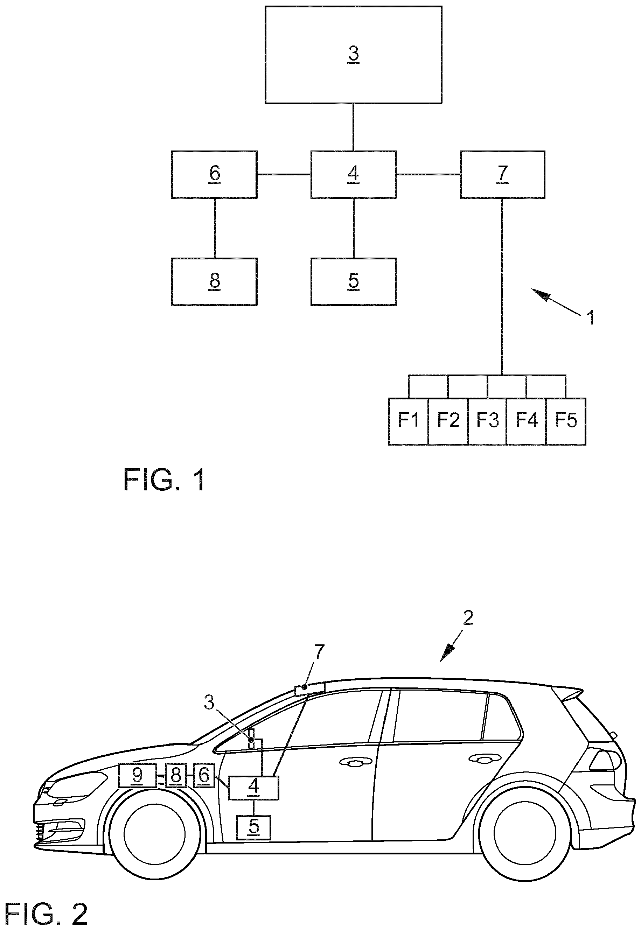

Mit Bezug zu den Figuren 1 und 2 wird ein Ausführungsbeispiel einer erfindungsgemäßen Vorrichtung 1 sowie eine Anordnung der erfindungsgemäßen Vorrichtung 1 in einem Fahrzeug 2 erläutert.

Das Fahrzeug 2 umfasst einen Elektromotor 9 sowie eine erfindungsgemäße Vorrichtung 1, wie sie in Figur 1 gezeigt ist. Der Elektromotor 9 des Fahrzeugs 2 ist dabei über eine Stromleitung mit einer wieder aufladbaren Batterie 8 verbunden. Die wieder aufladbare Batterie 8 ist dabei Teil der Vorrichtung 1.

Vor der Batterie 8 ist eine Ermittlungseinheit 6 geschaltet, welche die in der Batterie 8 vorhandene Energiemenge $E_{bat}$ ermittelt.

Die Vorrichtung 1 umfasst zudem ein Temperaturmessgerät 7, welches die Umgebungstemperatur T des Fahrzeugs 2 erfasst. Dabei kann insbesondere bereits ein im Fahrzeug 2 für verschiedene Fahrzeugfunktionen verwendetes Temperaturmessgerät 7 verwendet werden. Alternativ kann die Vorrichtung 1 die Umgebungstemperatur T auch aus erhobenen Daten eines Wetterdienstes erhalten.

Das Temperaturmessgerät 7 und die Ermittlungseinheit 6 sind mit einer Steuervorrichtung 4 gekoppelt und übermitteln die von ihnen ermittelten Daten, also die in der Batterie 8 vorhandene Energiemenge $E_{bat}$ und die Umgebungstemperatur T, an die Steuervorrichtung 4. Die Steuervorrichtung 4 steuert zudem mehrere Fahrzeugfunktion F1 bis F5 an. Die Fahrzeugfunktionen F1 bis F5 sind dabei im vorliegenden Beispiel Fahrzeugfunktionen, mit denen, wenn sie eingeschaltet werden, Energie eingespart und daher die Reichweite des Fahrzeugs 2 erhöht werden kann. Diese werden im weiteren als ECO-Funktionen bezeichnet. Die Funktion F1 ist dabei beispielsweise die Funktion "Klimazonenabschaltung". Die Funktion F2 ist die Funktion "Heizen mit IR-Strahlung". Die Funktion F3 ist die Funktion "Heizen mit Sitzheizung", die Funktion F4 die Funktion "Zielklimatisierung" und die Funktion F5 "Klima für Winterkleidung". Die ECO-Funktionen können dabei insbesondere auch dazu verwendet werden, energieaufwendige Komponenten von anderen Fahrzeugfunktionen auszuschalten.

Die Steuervorrichtung 4 übergibt die Daten der Ermittlungseinheit 6 und des Temperaturmessgerätes 7 an eine Prognoseeinheit 5. Die Prognoseeinheit 5 berechnet aus den Daten und in der Prognoseeinheit 5 abgespeicherten Näherungsfunktionen Werte für eine erste Energiemenge $E_1$ und für zweite Energiemengen $E_2$, die für die Fahrzeugfunktionen F1 bis F5 spezifisch sind.

Die erste Energiemenge $E_1$ entspricht einer Energiemenge, die das Fahrzeug 2 voraussichtlich auf einer bestimmten Strecke und/oder während einer bestimmten Fahrtdauer in einem Grundzustand verbraucht. Für diese Berechnung wird lediglich ein Energieverbrauch zugrunde gelegt, den der Fahrer nicht bewusst beeinflusst oder nicht beeinflussen kann. Insbesondere ist ein Grundzustand des Fahrzeugs ein Zustand des Fahrzeugs, der ohne Komfortfunktionen betrieben wird. Beispielsweise sind also weder ein Energieverbrauch durch eine Klimafunktion oder eine Radiofunktion berücksichtigt.

Die zweiten Energiemengen $E_2$ entsprechen den Energiemengen, die von den Fahrzeugfunktionen F1 bis F5 verbraucht oder eingespart werden würden, wenn der Fahrer die Fahrzeugfunktionen F1 bis F5 einschalten würde. Dabei kann das Einschalten der Fahrzeugfunktionen F1 bis F5 mit dem Ausschalten bestimmter Fahrzeugvorrichtungen oder bestimmter einzelner Elemente einer Fahrzeugfunktion, beispielsweise einer Klimafunktion, verbunden sein.

Weiterhin ist die Steuervorrichtung 4 mit einer Anzeigevorrichtung 3 gekoppelt oder verbunden.

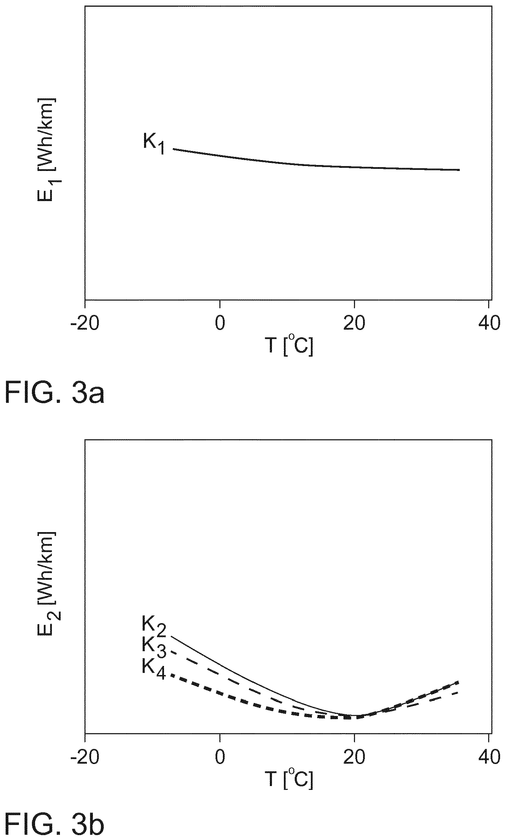

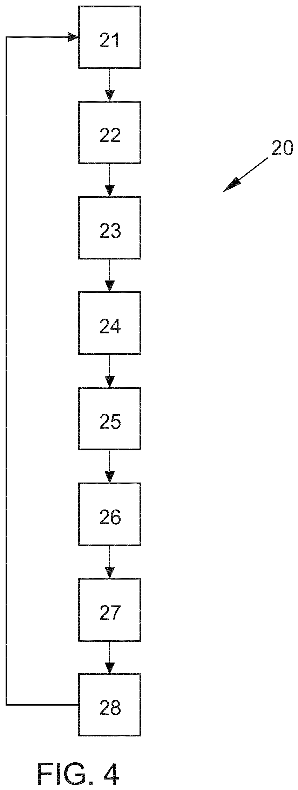

Mit Bezug zu den Figuren 3a bis 3e und 4 wird ein erstes Ausführungsbeispiel des erfindungsgemäßen Verfahrens 20 erläutert:

Zunächst wird in Schritt 21 von der Ermittlungseinheit 6 der Ladezustand SOC der Batterie 8 ermittelt. Anhand des Ladzustands SOC und der Nennkapazität $E_{kap}$ der Batterie 8 wird die im Fahrzeug 2 vorhandene Energiemenge $E_{bat}$ über $E_{bat}=SOC*E_{kap}$ ermittelt. Die Nennkapazität $E_{kap}$ ist dabei die vom Hersteller der Batterie 8 angegebene, unter kontrollierten Bedingungen ermittelte Kapazität der Batterie 8. Der Wert, der dabei berechnet wird, stellt den Wert der Energiemenge dar, der für die gesamte Dauer bis zur Entladung zur Verfügung steht. Die vorhandenen Energiemenge $E_{kap}$ trägt die Einheit Wh.

Um eine Prognose der ersten E1 und der zweiten Energiemenge E2 berechnen zu können, wird in Schritt 22 von dem Temperaturmessgerät 7 die Umgebungstemperatur T des Fahrzeugs 2 erfasst. Der erfasste Wert der Umgebungstemperatur T wird an die Prognoseeinheit 5 übertragen.

Ein Wert der ersten Energiemenge $E_1$ wird dann in Schritt 23 unter Verwendung des erfassten Temperaturwertes T und des Polynoms $E_1=a_0T^2+a_1T+a_2$ bestimmt. Die Parameter $a_0$, $a_1$ und $a_2$ sind dabei in der Prognoseeinheit 5 in einer Lookup-Tabelle für die erste Energiemenge $E_1$ abgespeichert. Diese können im Vorfeld in einem Referenzfahrzeug für den Grundverbrauch für verschiedene Umgebungstemperaturen T ermittelt worden sein. Die erste Energiemenge $E_1$ bezeichnet dabei einen Energieverbrauch pro Kilometer und trägt die Einheit Wh/km.

Die erste Energiemenge $E_1$ bezeichnet dabei insbesondere einen Grundverbrauch des Fahrzeugs 2. In Figur 3a ist beispielhaft eine Kurve $K_1$ gezeigt, die den Verlauf des Werts des Grundverbrauchs in Abhängigkeit von der Umgebungstemperatur T zeigt. Der Grundverbrauch berücksichtigt keinen Energieverbrauch von Komfortfunktionen.

Vielmehr stellt dieser den Energieverbrauch dar, der von einem Fahrer nicht bewusst beeinflussbar ist. Dieser wird insbesondere durch Energieverbrauch aufgrund von Fahrzeugantrieb und des Elektroniksystems des Fahrzeugs bestimmt.

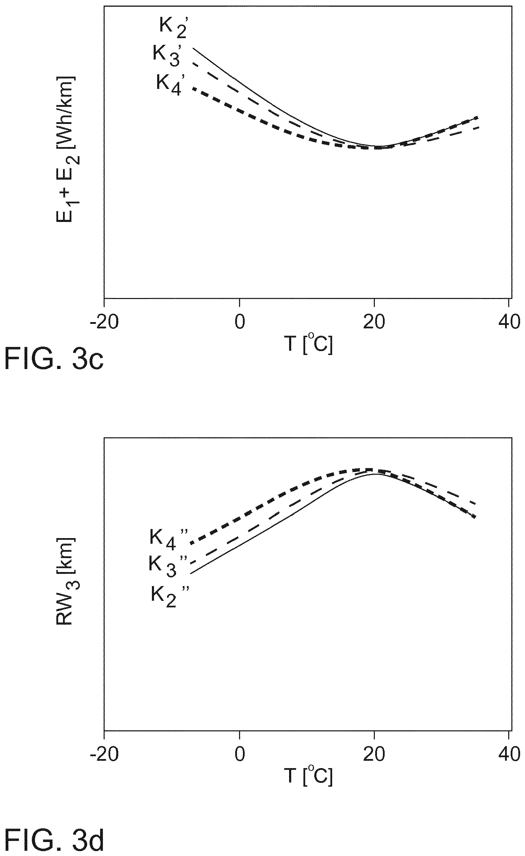

Als Grundverbrauch kann insbesondere auch der Energieverbrauch definiert werden, den das Fahrzeug in einem vom Fahrer definierten Grundzustand aufweist. Insbesondere wird dann ein Energieverbrauch berücksichtigt, der durch eine bevorzugte Fahrweise des Fahrers hervorgerufen wird. Dabei werden dann bevorzugte Standardeinstellungen der Klimaanlage oder andere Fahrzeugfunktionen berücksichtigt. Dies wird im Folgenden als Standardsituation bezeichnet. Ein Verlauf des Energieverbrauchs der in der Standardsituation eingeschalteten Fahrzeugfunktionen in Abhängigkeit von der Umgebungstemperatur T ist dabei in Figur 3b als Kurve K2 gezeigt. In Figur 3c wird mit der Kurve K2' ein Verlauf des Gesamtenergieverbrauchs in der Standardsituation, also des Grundverbrauchs, in Abhängigkeit von der Umgebungstemperatur T gezeigt. Auf diesen wird sich im weiteren Verlauf mit dem Bezugszeichen $E_1$ bezogen.

In Schritt 24 wird ein erster Gesamtreichweitenwert $RW_1$ über $RW_1=E_{bat}/E_1$ berechnet. Da $E_{bat}$ die Dimension Wh aufweist und $E_1$ die Dimension Wh/km aufweist, wird die Reichweite in km ermittelt. Dieser Reichweitenwert $RW_1$

gibt eine Prognose für die Reichweite ab, die erreichbar ist, wenn das Fahrzeug 2 im Grundzustand betrieben wird.

Weiterhin wird in Schritt 25 unter Verwendung der erfassten Umgebungstemperatur T ein Wert der zweiten Energiemenge $E_2$ für jede einzelne Fahrzeugfunktion F1 bis F5 ermittelt. Dazu wird die erfasste Umgebungstemperatur T in das Polynom $E_2=a_3T^2+a_4T+a_5$ eingesetzt. Auch hier können die Parameter $a_3$, $a_4$ und $a_5$ des Polynoms über eine Lookup-Tabelle ermittelt werden. Dabei können die Parameter $a_3$ bis $a_5$ für die unterschiedlichen Fahrzeugfunktionen F1 bis F5 für den Mehr- oder Minderverbrauch aus Simulationsdaten oder aus tatsächlichen Messdaten eines Referenzfahrzeugs ermittelt worden sein.

In Figur 3b sind beispielhaft die Kurven $K_3$ und $K_4$ gezeigt. Diese zeigen beispielhaft den Verlauf der zweiten Energiemenge $E_2$ in Abhängigkeit von der Umgebungstemperatur T.

Die Kurve $K_2$ bezeichnet, wie oben bereits erläutert, den Energieverbrauch von in der Standardsituation eingeschalteten Fahrzeugfunktionen.

$K_3$ beschreibt den Verlauf der zweiten Energiemenge $E_2$ in Abhängigkeit von der Umgebungstemperatur T mit Aktivierung der ECO-Funktion F1 "Klimazonenabschaltung". Bei Betrachtung der Kurve $K_3$ ist ersichtlich, dass die Aktivierung der Klimazonenabschaltung sowohl bei kalten wie auch bei warmen Umgebungstemperaturen T zu einer Energieverbrauchseinsparung im Vergleich zur Standardsituation führen würde. Diese kann also im Winter wie im Sommer dazu verwendet werden, Energie einzusparen.

$K_4$ beschreibt den Verlauf der zweiten Energiemenge $E_2$ in Abhängigkeit von der Umgebungstemperatur T des Fahrzeugs 2 bei aktivierter ECO-Funktion F2 "Heizen mit IR-Strahlung". Diese führt lediglich bei Umgebungstemperaturen unter etwa 20°C dazu, dass Energie eingespart wird. Bei Temperaturen um etwa 20°C überlagern sich die Kurven $K_2$ und $K_4$. Dies bedeutet, dass dann die normale Klimatisierung sowie die Klimatisierung mit der Fahrzeugfunktion F2 "Heizen mit IR-Strahlung" gleich viel Energie verbrauchen, so dass die Aktivierung der Fahrzeugfunktion F2 "Heizen mit IR-Strahlung" nicht zu einer Energieersparnis führen würde.

Aus dem Wert der ersten Energiemenge $E_1$ des Grundverbrauchs, der vorhandenen Energiemenge $E_{bat}$ und der zweiten Energiemenge $E_2$ prognostiziert die Prognoseeinheit 5 in Schritt 26 einen weiteren Gesamtreichweitenwert $RW_3$ für jede Fahrzeugfunktion F1 bis F5 gesondert. Dies wird über die Näherungsfunktion $RW_3=E_{bat}/(E_1+E_2)$ ermittelt.

Dazu sind zunächst in Figur 3c die Kurven $K_2$' bis $K_4$' gezeigt, welche die Summe der ersten und der zweiten Energiemenge $E_1+E_2$ für die Standardsituation, die Fahrzeugfunktion F1 und die Fahrzeugfunktion F2 darstellen. Mit Bezug auf die Kurven K1, K2, K3 und K4 in den Figuren 3a und 3b lassen sich die Kurven $K_2$', $K_3$' und $K_4$' also wie folgt berechnen: $K_2$' = $K_1+K_2$, $K_3$'=$K_1+K_3$ und $K_4$'=$K_1+K_4$. Da die Kurve $K_1$ für die Standardsituation, die Fahrzeugfunktion F1 und die Fahrzeugfunktion F2 gleich ist, ändert sich der prinzipielle Verlauf der Kurven $K_2$' bis $K_4$' im Vergleich zu den Kurven $K_2$ bis $K_4$ nicht.

In Figur 3d sind die zu der Standardsituation, der Fahrzeugfunktion F1 und der Fahrzeugfunktion F2 gehörigen Kurven $K_2$" bis $K_4$" des Reichweitenwerts $RW_3$ in Abhängigkeit von der Umgebungstemperatur T gezeigt. Da sich der Reichweitenwert $RW_3$ vereinfacht gesprochen aus dem Kehrwert des Werts für die zweite Energiemenge $E_2$ berechnet, da $E_{bat}$ und $E_1$ für die Standardsituation und die Fahrzeugfunktionen F1 bis F5 gleich sind, kehren sich auch die Kurven $K_2$" bis $K_4$" in ihrem Verlauf um.

Dies bedeutet, dass das Einschalten der ECO-Funktion F2 "Heizen mit IR-Strahlung" lediglich bei Außentemperaturen unterhalb von etwa 20°C zu einer Reichweitenerhöhung im Vergleich mit der Standardsituation führt.

Wird die ECO-Funktion F1 "Klimazonenabschaltung" eingeschaltet, führt dies hingegen sowohl bei kalten als auch bei warmen Umgebungstemperaturen T zu einer Reichweitenerhöhung im Vergleich mit der Standardsituation.

In Schritt 27 wird dann aus den prognostizierten Reichweiten $RW_1$ und $RW_3$ ein weiterer Reichweitenwert $RW_2$ ermittelt, welcher den Einfluss der Fahrzeugfunktionen F1 bis F5 auf den Reichweitenwert $RW_1$ anzeigt, wenn die Fahrzeugfunktionen F1 bis F5 eingeschaltet werden würden.

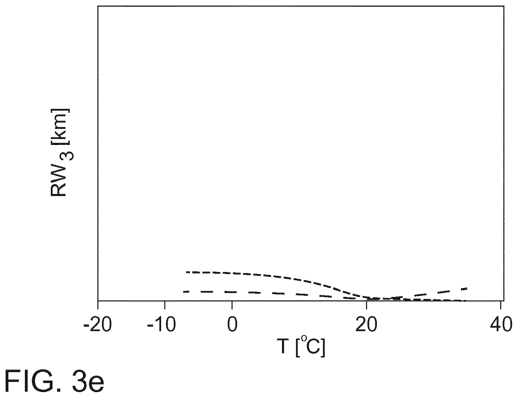

In Figur 3e sind Kurven K3"-K2" und K4"-K2" dargestellt, die den Verlauf der zweiten Reichweite $RW_2$ in Abhängigkeit von der Umgebungstemperatur T für die Fahrzeugfunktionen F1 (K3"-K2") und F2 (K4"-K2") zeigen. Dabei wird die dritte Reichweite $RW_3$ der Standardsituation von den dritten Reichweiten $RW_3$ der Fahrzeugfunktion F1 bzw. F2 abgezogen. Dies zeigt also, welchen Einfluss ein Einschalten der Fahrzeugfunktion F1 bzw. F2 auf die Reichweite $RW_1$ im Vergleich zur Standardsituation hätte.

Ist der Reichweiteneinfluss dann ermittelt worden, wird dieser für jede Fahrzeugfunktion F1 bis F5 gesondert angezeigt.

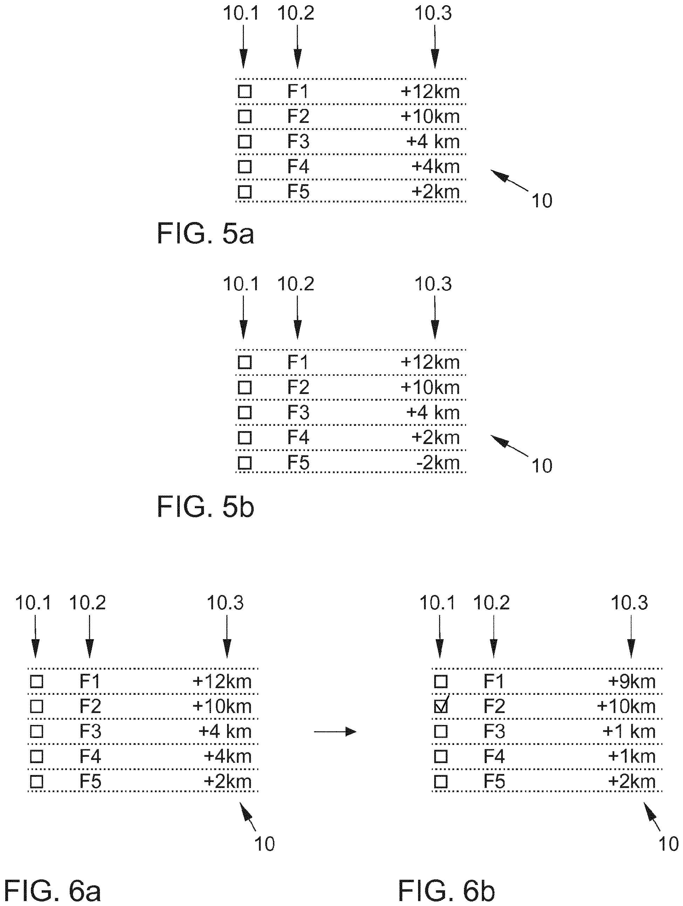

Dafür sind in den Figuren 5a und 5b zwei Ausführungsbeispiele für die Anzeige des zweiten Reichweitenwerts $RW_2$ auf einer Anzeigefläche der Anzeigevorrichtung 3 gezeigt.

Es wird eine Liste 10 angezeigt, die drei Spalten 10.1, 10.2 und 10.3 aufweist. In der zweiten Spalte 10.2 der Liste 10 werden die Fahrzeugfunktionen F1 bis F5 untereinander aufgelistet. Dadurch wird dem Fahrer zunächst klar gemacht, um welche Fahrzeugfunktion F1 bis F5 es sich bei der Anzeige handelt.

In der Spalte 10.1 wird ein Kästchen angezeigt. Ist das Kästchen leer, so bedeutet dies, dass die entsprechende Fahrzeugfunktion F1, F2, F3, F4 oder F5 nicht eingeschaltet ist. Wird das Kästchen mit einem Haken versehen angezeigt, so bedeutet dies, dass die entsprechende Fahrzeugfunktion F1, F2, F3, F4 oder F5 eingeschaltet ist.

Die dritte Spalte 10.3 zeigt hinter jeder Fahrzeugfunktion F1 bis F5 einen numerischen Wert an. Dieser gibt die nach oben erläutertem Verfahren bestimmten zweiten Reichweitenwert $RW_2$ an.

Wird beispielsweise eine Umgebungstemperatur T von -3°C ermittelt, so wird nach oben erläutertem Verfahren für die Fahrzeugfunktionen F1 bis F5 jeweils ein zweiter Reichweitenwert $RW_2$ prognostiziert. Würde der Fahrer die Fahrzeugfunktion F1 einschalten, würde sich der erste Reichweitenwert $RW_1$ um "12 km" erhöhen. Würde der Fahrer die Fahrzeugfunktion F2 einschalten, würde sich der erste Reichweitenwert $RW_1$ um "10 km" erhöhen. Würde der Fahrer die Fahrzeugfunktion F3 einschalten, würde sich der erste Reichweitenwert $RW_1$ um "4 km" erhöhen. Würde der Fahrer die Fahrzeugfunktion F4 einschalten, würde sich der erste Reichweitenwert $RW_1$ ebenfalls um "4 km" erhöhen und würde der Fahrer die Fahrzeugfunktion F5 einschalten, würde sich der erste Reichweitenwert $RW_1$ um "2 km" erhöhen.

Weiterhin werden die Fahrzeugfunktionen F1 bis F5 nach der Größe des zweiten Reichweitenwerts $RW_2$ absteigend sortiert. Die Fahrzeugfunktion F1 mit dem größten zweiten Reichweitenwert $RW_2$ wird an erster Stelle der Liste 10 angezeigt. Dadurch kann der Fahrer schnell und intuitiv erfassen, welche der Fahrzeugfunktionen F1 bis F5 die höchsten positiven Auswirkungen auf die Gesamtreichweite $RW_1$ hätte. Dadurch wird es dem Fahrer erleichtert, sich dafür zu entscheiden, eine der Fahrzeugfunktion F1 bis F5 einzuschalten.

Ist Funktion F5 beispielsweise eine Komfortfunktion, bei dessen Einschalten sich die Restreichweite verringert und nicht erhöht, also keine ECO-Funktion, so kann dies durch eine negatives Vorzeichen, also einer Anzeige von "-2 km" angezeigt werden. Diese wird dann an unterster Stelle der Liste 10 angezeigt. Dies ist in Figur 5b gezeigt.

Mit Bezug zu Figur 6a und 6b wird eine Weiterbildung des ersten Ausführungsbeispiel des erfindungsgemäßen Verfahrens erläutert.

Ausgangssituation hierbei ist die Anzeige aus Figur 5a, nochmals dargestellt in Figur 6a, sowie dass keine der ECO-Funktionen F1 bis F5 eingeschaltet ist.

Der Fahrer schaltet die ECO-Funktion F2 ein. Für diese wurde ihm angezeigt, dass sich dadurch der Reichweitenwert $RW_1$ um 10 km erhöht. Da sich die Reichweitenwerte $RW_2$ durch ein Einschalten der Fahrzeugfunktion F2 ändern, muss eine neue Prognose der zweiten Reichweitenwerte $RW_2$ für die Fahrzeugfunktionen F1, F3, F4 und F5 gestartet werden.

Wird also die Fahrzeugfunktion F2 eingeschalten, wird zunächst in Schritt 28 die Anzeigevorrichtung 3 derart angesteuert, dass in dem Kästchen in der Spalte 10.1 der Liste 10 neben der Fahrzeugfunktion F2 ein Haken gesetzt wird. Dies zeigt dem Fahrer an, dass die Fahrzeugfunktion F2 nun eingeschaltet ist.

Das Verfahren wird dann mit Schritt 21 mit einer neuen Prognose unter Berücksichtigung, dass die Fahrzeugfunktion F2 nun eingeschaltet ist, von neuem gestartet. Durch das Einschalten der Fahrzeugfunktion F2 ändern sich insbesondere die Parameter $a_3$, $a_4$ und $a_5$ der Näherungsfunktion zur Prognose der zweiten Energiemengen $E_2$ in Schritt 26 für die Fahrzeugfunktionen F1, F3, F4 und F5.

Weiterhin werden die neu prognostizierten Reichweitenwerte $RW_2$ in Spalte 10.3 der Liste 10 angezeigt.

Beispielsweise fällt die Reichweitenerhöhung durch die Fahrzeugfunktion F1 nicht mehr so hoch aus, wenn die Fahrzeugfunktion F2 bereits eingeschaltet ist.

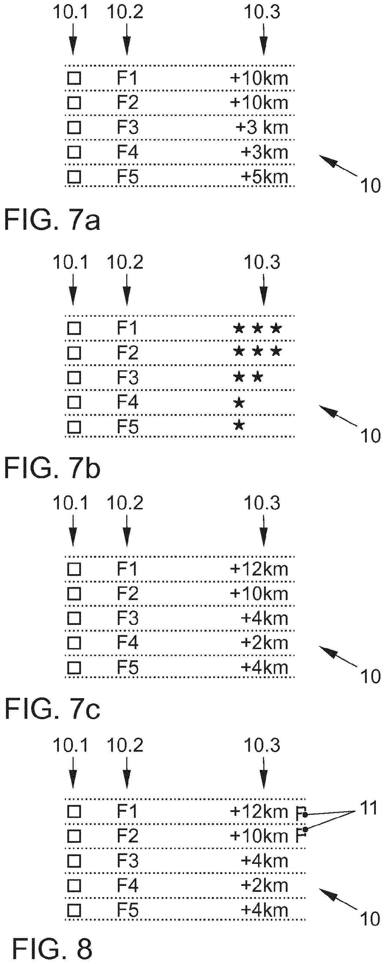

Mit Bezug zu den Figuren 7a bis 7c wird die Anzeige auf der Anzeigefläche der Anzeigevorrichtung 3 während eines weiteren Ausführungsbeispiels erläutert.

Dabei wird bei dem weiteren Ausführungsbeispiel die erste $E_1$ und die zweite Energiemenge $E_2$ anhand einer modellbasierten Rechnung prognostiziert.

Dazu werden in einem ersten Schritt neben der Umgebungstemperatur T weitere Parameter aus der Umgebung des Fahrzeugs 2 und dem Innenraum des Fahrzeugs 2 erhoben. Parameter aus der Umgebung des Fahrzeugs 2 können dabei beispielsweise ein Höhenprofil einer Fahrstrecke oder auf der Frontscheibe des Fahrzeugs 2 auftreffende Sonneneinstrahlung sein. Ein Parameter aus dem Innenraum des Fahrzeugs 2 kann beispielsweise die Feuchtigkeit im Innenraum des Fahrzeugs 2 sein.

In einem nächsten Schritt wird ein erste modellbasierte Prognose unter Berücksichtigung aller erhobenen Parameter gestartet. Modellbasierte Prognosen weisen zwar in der Regel eine hohe Genauigkeit, allerdings auch eine längere Prognosedauer auf. Die Prognosedauer der modellbasierten Prognose ist dabei von der Anzahl der berücksichtigten Parameter abhängig und liegt in einem Bereich von 2 bis 10.

Um den Fahrer nicht allzu lange auf ein Prognoseergebnis warten zu lassen, wird gleichzeitig zu der ersten modellbasierten Prognose eine zweite Prognose, die nach dem ersten Ausführungsbeispiel ausgeführt wird, gestartet. Diese weist zwar eine geringere Genauigkeit als die erste Prognose auf, liefert aber innerhalb von Millisekunden Ergebnisse. Die zweite Prognose ist daher zu einem früheren Zeitpunkt beendet als die erste.

Ist also die zweite Prognose beendet, wird in der dritten Spalte 10.3 der Liste 10 die Ergebnisse der zweiten Prognose angezeigt. Um dem Fahrer zu verdeutlichen, dass es sich um ein vorübergehendes Ergebnis handelt, kann das Ergebnis auf unterschiedliche Weise angezeigt werden.

In Figur 7a ist ein Beispiel gezeigt, in dem numerische Werte als Ergebnisse der zweiten Prognose in Kursivschrift angezeigt werden. In Figur 7b ist ein zweites Beispiel der Anzeige des Ergebnisses aus der zweiten Prognose gezeigt. Dabei werden graphische Objekte, im vorliegenden Beispiel Sterne, angezeigt. Dabei wird über die Anzahl der angezeigten Sterne verdeutlicht, wie hoch der Einfluss ein Einschalten der Fahrzeugfunktion F1, F2, F3, F4 oder F5 auf den ersten Reichweitenwert $RW_1$ ist. Dadurch wird dem Fahrer eine erste Einschätzung zum Einfluss des Einschaltens der Fahrzeugfunktionen F1 bis F5 auf den ersten Reichweitenwert $RW_1$ gegeben.

Ist die erste Prognose beendet, werden die mit der zweiten Prognose ermittelten Ergebnisse auf der Anzeigefläche durch die mit der ersten Prognose ermittelten Ergebnisse ersetzt. Dies wird dem Fahrer dadurch angezeigt, dass die Schriftart der angezeigten numerischen Werte der üblicherweise für die Anzeige von Textzeichen verwendeten Schriftart entspricht. Dies ist in Figur 7c gezeigt.

In Figur 8 ist ein weiteres Beispiel der Anzeige auf der Anzeigefläche der Anzeigevorrichtung 3 gezeigt.

Dabei wird zunächst eine Strecke ermittelt, welche befahren werden soll. Dies geschieht in der Regel durch ein Navigationssystem. Dabei wird insbesondere die Entfernung ermittelt, in der sich das Fahrziel der Strecke befindet.

Dann wird ermittelt, ob das Fahrziel mit der prognostizierten ersten Reichweite $RW_1$ noch erreichbar ist. Ist dies nicht der Fall, liegt also das Ziel außerhalb der Reichweite des Fahrzeugs 2, so wird ermittelt, ob das Ziel erreichbar wäre, wenn eine der Fahrzeugfunktionen F1 bis F5 eingeschaltet werden würde.

Im vorliegenden Beispiel wäre das Fahrziel erreichbar, wenn der Fahrer die Fahrzeugfunktion F1 oder die Fahrzeugfunktion F2 einschalten würde. Dies wird dem Fahrer durch ein graphisches Element 11 in Form einer Zielfahne signalisiert.

Die verschiedenen Ausführungsformen der Verfahren können ohne weiteres miteinander kombiniert werden.

**Bezugszeichenliste**

| | |
|---|---|
| 1 | Vorrichtung |
| 2 | Fahrzeug |
| 3 | Anzeigevorrichtung |
| 4 | Steuervorrichtung |
| 5 | Prognoseeinheit |
| 6 | Ermittlungseinheit |
| 7 | Temperaturmesseinheit |
| 8 | Batterie |
| 9 | Elektromotor |
| 10 | Liste |
| 10.1 - 10.3 | erste bis dritte Spalte der Liste |
| 11 | graphisches Element |
| F1 - F5 | Fahrzeugfunktionen |
| 20 | Verfahren |
| 21 - 28 | Verfahrensschritte |
| $E_1$ | erste Energiemenge |
| $E_2$ | zweite Energiemenge |
| $E_{kap}$ | Nennkapazität der Batterie |
| SOC | Ladezustand der Batterie |
| $E_{bat}$ | In der Batterie vorhanden Energiemenge |
| T | Umgebungstemperatur |
| $RW_1$-$RW_3$ | erster bis dritter Reichweitenwert |
| $a_0$-$a_2$ | Polynomparameter für erste Energiemenge |
| $a_3$-$a_5$ | Polynomparameter für zweite Energiemenge |

**Patentansprüche**

1.   Verfahren zur Prognose einer Reichweitenveränderung durch Ein- oder Ausschalten einer Fahrzeugfunktion (F1 - F5) eines Fahrzeugs (2), bei dem

ein Wert einer im Fahrzeug (2) vorhandenen Energiemenge ($E_{bat}$) ermittelt wird,
ein Wert einer ersten Energiemenge ($E_1$) prognostiziert wird, die in einem Grundzustand für eine bestimmte Strecke und/oder Fahrtdauer voraussichtlich verbraucht wird, wobei aus dem prognostizierten Wert der ersten Energiemenge ($E_1$) und der vorhandenen Energiemenge ($E_{bat}$) ein erster Reichweitenwert ($RW_1$) prognostiziert wird,

ein Wert einer zweiten Energiemenge ($E_2$) prognostiziert wird, die verbraucht oder eingespart werden würde, wenn die Fahrzeugfunktion (F1 - F5) ein- oder ausgeschaltet werden würde,

eine Umgebungstemperatur (T) des Fahrzeugs (2) erfasst wird, wobei die Prognose zumindest des Werts der zweiten Energiemenge ($E_2$) von der Umgebungstemperatur (T) des Fahrzeugs (2) abhängig ist,

aus den Werten der vorhandenen Energiemenge ($E_{bat}$), der ersten Energiemenge ($E_1$) und der zweiten Energiemenge ($E_2$) ein zweiter Reichweitenwert ($RW_2$) prognostiziert wird, um den der erste Reichweitenwert ($RW_1$) erhöht oder erniedrigt werden würde, wenn die Fahrzeugfunktion (F1 - F5) ein- oder ausgeschaltet werden würde, und

der zweite Reichweitenwert ($RW_2$) angezeigt wird,

**dadurch gekennzeichnet, dass**
der Wert der zweiten Energiemenge ($E_2$) über die Näherungsfunktion

$$E_2 = a_3 T^2 + a_4 T + a_5$$

prognostiziert wird, wobei $a_3$, $a_4$ und $a_5$ Parameter der Näherungsfunktion sind, die spezifisch für die Fahrzeugfunktion (F1 - F5) sind, und T die Umgebungstemperatur (T) des Fahrzeugs (2) ist.

**2.** Verfahren nach Anspruch 1,
**dadurch gekennzeichnet, dass**
der Wert der ersten Energiemenge ($E_1$) über die Näherungsfunktion

$$E_1 = a_0 T^2 + a_1 T + a_2$$

prognostiziert wird,
die vorhandene Energiemenge ($E_{bat}$) in einer Batterie (8) gespeichert ist, und
der Wert der vorhandenen Energiemenge ($E_{bat}$) über die Näherungsfunktion

$$E_{bat} = SOC * E_{kap}$$

abgeschätzt wird, wobei $a_0$, $a_1$ und $a_2$ Parameter der Näherungsfunktion sind, die spezifisch für den Grundzustand sind, T die Umgebungstemperatur (T) des Fahrzeugs (2) ist, SOC der Ladezustand (SOC) der Batterie (8) ist und $E_{kap}$ die Nennkapazität ($E_{kap}$) der Batterie (8) ist.

**3.** Verfahren nach Anspruch 1 oder 2,
**dadurch gekennzeichnet, dass**
der erste Reichweitenwert ($RW_1$) aus dem Wert der vorhandenen Energiemenge ($E_{bat}$) und dem prognostizierten Wert der ersten Energiemenge ($E_1$) über

$$RW_1 = E_{bat} / E_1$$

prognostiziert wird, und/oder
ein dritter Reichweitenwert ($RW_3$) aus dem Wert der vorhandenen Energiemenge ($E_{bat}$), dem prognostizierten Wert der ersten Energiemenge ($E_1$) und dem prognostizierten Wert der zweiten Energiemenge ($E_2$) über

$$RW_3 = E_{bat} / (E_1 + E_2)$$

prognostiziert wird, wobei der dritte Reichweitenwert ($RW_3$) die Reichweite angibt, die erreicht werden würde, wenn die Fahrzeugfunktion (F1 - F5) ein- oder ausgeschaltet werden würde.

**4.** Verfahren nach Anspruch 3,
**dadurch gekennzeichnet, dass**

der zweite Reichweitenwert (RW$_2$), um den der erste Reichweitenwert (RW$_1$) erhöht bzw. erniedrigt wird, wird durch Differenzbildung zwischen dem ersten Reichweitenwert (RW$_1$) und dem dritten Reichweitenwert (RW$_3$) ermittelt wird.

**5.** Verfahren nach einem der vorhergehenden Ansprüche,
**dadurch gekennzeichnet, dass**

der zweite Reichweitenwert (RW$_2$) über eine erste Näherungsfunktion einer ersten Genauigkeit prognostiziert wird,
wenn eine Dauer zur Prognose für den zweiten Reichweitenwert (RW$_2$) eine vorgegebene Zeitspanne übersteigt, der zweite Reichweitenwert (RW$_2$) zunächst über eine zweite Näherungsfunktion mit einer zweiten Genauigkeit prognostiziert wird, wobei die zweite Genauigkeit geringer ist als die erste Genauigkeit,
der mit der zweiten Näherungsfunktion prognostizierte zweite Reichweitenwert (RW$_2$) angezeigt wird und
der angezeigte zweite Reichweitenwert (RW$_2$) durch den mit der zweiten Näherungsfunktion berechneten zweiten Reichweitenwert (RW$_2$) ersetzt wird, wenn die Prognose mit der zweiten Näherungsfunktion beendet ist.

**6.** Verfahren nach einem der vorhergehenden Ansprüche,
**dadurch gekennzeichnet, dass**

ermittelt wird, ob ein Ziel einer Fahrtstrecke erreichbar wäre, wenn die Fahrzeugfunktion (F1 - F5) ein- oder ausgeschaltet werden würde,
wenn ermittelt wird, dass das Ziel der Fahrtstrecke durch Ein- oder Ausschalten der Fahrzeugfunktion (F1 - F5) erreichbar wäre, ein graphisches Element (11) angezeigt wird.

**7.** Verfahren nach einem der vorhergehenden Ansprüche,
**dadurch gekennzeichnet, dass**

das Fahrzeug (2) mehrere Fahrzeugfunktionen (F1 - F5) aufweist, mittels welchen der erste Reichweitenwert (RW$_1$) veränderbar ist, und
für jede der mehreren Fahrzeugfunktionen (F1 - F5) der zweite Reichweitenwert (RW$_2$) prognostiziert und angezeigt wird.

**8.** Verfahren nach Anspruch 7,
**dadurch gekennzeichnet, dass**

zumindest eine der mehreren Fahrzeugfunktionen (F1 - F5) ein- oder ausgeschaltet wird,
der Einfluss der ein- bzw. ausgeschalteten Funktion (F2) auf die zweiten Reichweitenwerte (RW$_2$) für andere Fahrzeugfunktionen (F1, F3, F4, F5) ermittelt wird,
die zweiten Reichweitenwerte (RW$_2$) in Abhängigkeit von dem Einfluss der ein- bzw. ausgeschalteten Fahrzeugfunktion (F2) neu prognostiziert werden und
die neu prognostizierten zweiten Reichweitenwerte (RW$_2$) angezeigt werden.

**9.** Verfahren nach Anspruch 7 oder 8,
**dadurch gekennzeichnet, dass**
die zweiten Reichweitenwerte (RW$_2$) der Fahrzeugfunktionen (F1 - F5) der Größe nach absteigend sortiert werden und die sortierten zweiten Reichweitenwerte (RW$_2$) in einer Liste (10) angezeigt werden.

**10.** Vorrichtung (1) zur Prognose einer Reichweitenveränderung durch Ein- oder Ausschalten einer Fahrzeugfunktion (F1 - F5) eines Fahrzeugs (2), wobei das Fahrzeug (2) zumindest eine Fahrzeugfunktion (F1 - F5) aufweist, die ein- und/oder ausschaltbar ist, mit

einer Ermittlungseinheit (6), mittels welcher ein Wert einer im Fahrzeug (2) vorhandenen Energiemenge (E$_{bat}$) ermittelbar ist,
einer Temperaturmesseinheit (7), mittels welcher die Umgebungstemperatur (T) des Fahrzeugs (2) erfassbar ist,
einer Prognoseeinheit (5), mittels welcher

ein Wert einer ersten Energiemenge (E$_1$) prognostizierbar ist, die in einem Grundzustand des Fahrzeugs (2) für eine bestimmte Strecke und/oder Fahrtdauer voraussichtlich verbraucht wird, wobei aus dem prognostizierten Wert der ersten Energiemenge (E$_1$) und dem Wert der vorhandenen Energiemenge (E$_{bat}$) ein

erster Reichweitenwert (RW$_1$) prognostizierbar ist,

ein Wert einer zweiten Energiemenge (E$_2$) prognostizierbar ist, die verbraucht oder eingespart werden würde, wenn die Fahrzeugfunktion (F1 - F5) ein- oder ausgeschaltet werden würde, wobei der Wert der zweiten Energiemenge (E$_2$) in Abhängigkeit von der Umgebungstemperatur (T) prognostizierbar ist, und

ein zweiter Reichweitenwert (RW$_2$) aus den Werten der vorhandenen Energiemenge (E$_{bat}$), der ersten Energiemenge (E$_1$) und der zweiten Energiemenge (E$_2$) prognostizierbar ist, um den der erste Reichweitenwert (RW$_1$) erhöht oder erniedrigt wird, wenn die Fahrzeugfunktion (F1 - F5) ein- oder ausgeschaltet werden würde,

einer Anzeigevorrichtung (3) und

einer Steuervorrichtung (4), mittels welcher die Anzeigevorrichtung (3) derart ansteuerbar ist, dass die zweiten Reichweitenwerte (RW$_2$) auf der Anzeigevorrichtung (3) anzeigbar sind,

**dadurch gekennzeichnet, dass**
der Wert der zweiten Energiemenge (E$_2$) über die Näherungsfunktion

$$E_2 = a_3 T^2 + a_4 T + a_5$$

prognostizierbar ist, wobei a$_3$, a$_4$ und a$_5$ Parameter der Näherungsfunktion sind, die spezifisch für die Fahrzeugfunktion (F1 - F5) sind, und T die Umgebungstemperatur (T) des Fahrzeugs (2) ist.

**11.** Vorrichtung (1) nach Anspruch 10,
**dadurch gekennzeichnet, dass**
die Vorrichtung (1) eine Batterie (8) umfasst, in der die vorhandene Energiemenge (E$_{bat}$) gespeichert ist.

**12.** Fahrzeug (2) mit einem Elektromotor (9) und einer Vorrichtung (1) nach einem der Ansprüche 10 oder 11.


**Claims**

**1.** Method for predicting a range change as a result of switching a vehicle function (F1 - F5) of a vehicle (2) on or off, in which

a value of an amount of energy (E$_{bat}$) available in the vehicle (2) is determined,

a value is predicted of a first amount of energy (E$_1$) which, in a basic state, is expected to be consumed for a specific distance and/or travel duration, wherein a first range value (RW$_1$) is predicted from the predicted value of the first amount of energy (E$_1$) and the available amount of energy (E$_{bat}$),

a value of a second amount of energy (E$_2$) is predicted which would be consumed or saved if the vehicle function (F1 - F5) were switched on or off,

an ambient temperature (T) of the vehicle (2) is detected, wherein the prediction of at least the value of the second amount of energy (E$_2$) is dependent on the ambient temperature (T) of the vehicle (2),

a second range value (RW$_2$) is predicted from the values of the available amount of energy (E$_{bat}$), the first amount of energy (E$_1$), and the second amount of energy (E$_2$), by which second range value (RW$_2$) the first range value (RW$_1$) would be increased or decreased if the vehicle function (F1 - F5) were switched on or off, and the second range value (RW$_2$) is displayed,

**characterized in that**
the value of the second amount of energy (E$_2$) is predicted via the approximation function

$$E_2 = a_3 T^2 + a_4 T + a_5,$$

wherein a$_3$, a$_4$, and as are parameters of the approximation function that are specific to the vehicle function (F1 - F5), and T is the ambient temperature (T) of the vehicle (2).

**2.** Method according to claim 1,

**characterized in that**
the value of the first amount of energy ($E_1$) is predicted via the approximation function

$$E_1 = a_0 T^2 + a_1 T + a_2,$$

the available amount of energy ($E_{bat}$) is stored in a battery (8), and the value of the available amount of energy ($E_{bat}$) is estimated via the approximation function

$$E_{bat} = SOC * E_{kap},$$

wherein $a_0$, $a_1$, and $a_2$ are parameters of the approximation function that are specific to the basic state, T is the ambient temperature (T) of the vehicle (2), SOC is the state of charge (SOC) of the battery (8), and $E_{kap}$ is the rated capacity ($E_{kap}$) of the battery (8).

3. Method according to claim 1 or 2,
   **characterized in that**
   the first range value ($RW_1$) is predicted from the value of the available amount of energy ($E_{bat}$) and the predicted value of the first amount of energy ($E_1$), via

$$RW_1 = E_{bat}/E_1,$$

   and/or
   a third range value ($RW_3$) is predicted from the value of the available amount of energy ($E_{bat}$), the predicted value of the first amount of energy ($E_1$), and the predicted value of the second amount of energy ($E_2$), via

$$RW_3 = E_{bat}/(E_1 + E_2),$$

   wherein the third range value ($RW_3$) indicates the range which would be achieved if the vehicle function (F1 - F5) were switched on or off.

4. Method according to claim 3,
   **characterized in that**
   the second range value ($RW_2$), by which the first range value ($RW_1$) is increased or decreased, is determined by calculating the difference between the first range value ($R W_1$) and the third range value ($RW_3$).

5. Method according to one of the preceding claims,
   **characterized in that**

   the second range value ($RW_2$) is predicted via a first approximation function of a first accuracy,
   if a duration for predicting the second range value ($RW_2$) exceeds a predetermined period of time, the second range value ($RW_2$) is first predicted via a second approximation function with a second accuracy, wherein the second accuracy is less than the first accuracy,
   the second range value ($RW_2$) predicted with the second approximation function is displayed, and
   the displayed second range value ($RW_2$) is replaced by the second range value ($RW_2$) calculated with the second approximation function if the prediction with the second approximation function is terminated.

6. Method according to one of the preceding claims,
   **characterized in that**

   it is determined whether a destination of a route could be reached if the vehicle function (F1 - F5) were switched on or off,
   if it is determined that the destination of the route could be reached by switching the vehicle function (F1 - F5) on or off, a graphical element (11) is displayed.

7. Method according to one of the preceding claims,
   **characterized in that**

   the vehicle (2) has a plurality of vehicle functions (F1 - F5) by means of which the first range value ($RW_1$) can be changed, and
   the second range value ($RW_2$) is predicted and displayed for each of the plurality of vehicle functions (F1 - F5).

8. Method according to claim 7,
   **characterized in that**

   at least one of the plurality of vehicle functions (F1 - F5) is switched on or off,
   the influence of the on or off function (F2) on the second range values ($RW_2$) is determined for other vehicle functions (F1, F3, F4, F5),
   the second range values ($RW_2$) are re-predicted depending on the influence of the vehicle function (F2) if switched on or off, and
   the re-predicted second range values ($RW_2$) are displayed.

9. Method according to claim 7 or 8,
   **characterized in that**
   the second range values ($RW_2$) of the vehicle functions (F1 - F5) are sorted in descending order according to size, and the sorted second range values ($RW_2$) are displayed in a list (10).

10. Device (1) for predicting a range change as a result of switching a vehicle function (F1 - F5) of a vehicle (2) on or off, wherein the vehicle (2) has at least one vehicle function (F1 - F5) which can be switched on and/or off, with

    a determination unit (6) by means of which a value of an available amount of energy ($E_{bat}$) in the vehicle (2) can be determined,
    a temperature measuring unit (7) by means of which the ambient temperature (T) of the vehicle (2) can be detected,
    a prediction unit (5), by means of which

    a value of a first amount of energy ($E_1$) can be predicted which, in a basic state of the vehicle (2), is expected to be consumed for a specific distance and/or travel duration, wherein a first range value ($RW_1$) can be predicted from the predicted value of the first amount of energy ($E_1$) and the available amount of energy ($E_{bat}$),
    a value of a second amount of energy ($E_2$) can be predicted that would be consumed or saved if the vehicle function (F1 - F5) were switched on or off, wherein the value of the second amount of energy ($E_2$) can be predicted as a function of the ambient temperature (T), and
    a second range value ($RW_2$) can be predicted from the values of the available amount of energy ($E_{bat}$), the first amount of energy ($E_1$), and the second amount of energy ($E_2$), by which second range value ($RW_2$) the first range value ($RW_1$) is increased or decreased if the vehicle function (F1 - F5) were switched on or off,

    a display device (3), and
    a control device (4) by means of which the display device (3) can be controlled in such a way that the second range values ($RW_2$) can be displayed on the display device (3),

    **characterized in that**
    the value of the second amount of energy ($E_2$) can be predicted via the approximation function

    $$E_2 = a_3 T^2 + a_4 T + a_5,$$

    wherein $a_3$, $a_4$, and as are parameters of the approximation function that are specific to the vehicle function (F1 - F5), and T is the ambient temperature (T) of the vehicle (2).

11. Device (1) according to claim 10,
    **characterized in that**
    the device (1) comprises a battery (8) in which the available amount of energy ($E_{bat}$) is stored.

**12.** Vehicle (2) having an electric motor (9) and a device (1) according to any one of claims 10 or 11.

**Revendications**

**1.** Procédé pour le pronostic d'une modification de l'autonomie par l'activation ou la désactivation d'une fonction de véhicule (F1 - F5) d'un véhicule (2), dans lequel
une valeur d'une quantité d'énergie ($E_{bat}$) disponible dans le véhicule (2) est déterminée,
une valeur d'une première quantité d'énergie ($E_1$), qui sera vraisemblablement consommée dans un état de base pour un itinéraire déterminé et/ou une durée de trajet déterminée, est pronostiquée, une première valeur d'autonomie ($RW_1$) étant pronostiquée à partir de la valeur pronostiquée de la première quantité d'énergie ($E_1$) et de la quantité d'énergie ($E_{bat}$) disponible,
une valeur d'une deuxième quantité d'énergie ($E_2$), qui serait consommée ou économisée si la fonction de véhicule (F1 - F5) était activée ou désactivée, est pronostiquée,
une température environnante (T) du véhicule (2) est détectée, le pronostic au moins de la valeur de la deuxième quantité d'énergie ($E_2$) dépendant de la température environnante (T) du véhicule (2),
une deuxième valeur d'autonomie ($RW_2$), de laquelle la première valeur d'autonomie ($RW_1$) serait augmentée ou diminuée si la fonction de véhicule (F1 - F5) était activée ou désactivée, est pronostiquée à partir des valeurs de la quantité d'énergie ($E_{bat}$) disponible, de la première quantité d'énergie ($E_1$) et de la deuxième quantité d'énergie ($E_2$) et la deuxième valeur d'autonomie ($RW_2$) est affichée,
**caractérisé en ce que**
la valeur de la deuxième quantité d'énergie ($E_2$) est pronostiquée via la fonction d'approximation

$$E_2 = a_3 T^2 + a_4 T + a_5$$

dans laquelle $a_3$, $a_4$ et $a_5$ sont des paramètres de la fonction d'approximation, qui sont spécifiques à la fonction de véhicule (F1 - F5) et T est la température environnante (T) du véhicule (2).

**2.** Procédé selon la revendication 1,
**caractérisé en ce que**
la valeur de la première quantité d'énergie (E1) est pronostiquée via la fonction d'approximation

$$E_1 = a_0 T^2 + a_1 T + a_2,$$

la quantité d'énergie ($E_{bat}$) disponible est accumulée dans une batterie (8) et la valeur de la quantité d'énergie ($E_{bat}$) disponible est estimée via la fonction d'approximation

$$E_{bat} = SOC * E_{kap}$$

dans laquelle $a_0$, $a_1$ et $a_2$ sont des paramètres de la fonction d'approximation, qui sont spécifiques à l'état de base, T représente la température environnante (T) du véhicule (2), SOC représente l'état de charge (SOC) de la batterie (8) et $E_{kap}$ représente la capacité nominale ($E_{kap}$) de la batterie (8).

**3.** Procédé selon la revendication 1 ou 2,
**caractérisé en ce que**
la première valeur d'autonomie ($RW_1$) est pronostiquée à partir de la valeur de la quantité d'énergie ($E_{bat}$) disponible et de la valeur pronostiquée de la première quantité d'énergie ($E_1$) via

$$RW_1 = E_{bat}/E_1$$

et/ou
une troisième valeur d'autonomie ($RW_3$) est pronostiquée à partir de la valeur de la quantité d'énergie ($E_{bat}$) disponible, de la valeur pronostiquée de la première quantité d'énergie ($E_1$) et de la valeur pronostiquée de la deuxième

quantité d'énergie ($E_2$) via

$$RW_3 = E_{bat}/(E_1+E_2)$$

la troisième valeur d'autonomie ($RW_3$) indiquant l'autonomie qui serait atteinte si la fonction de véhicule (F1 - F5) était activée ou désactivée.

4. Procédé selon la revendication 3,
   **caractérisé en ce que**
   la deuxième valeur d'autonomie ($RW_2$), de laquelle la première valeur d'autonomie ($RW_1$) est augmentée ou diminuée, est déterminée par la différence entre la première valeur d'autonomie ($RW_1$) et la troisième valeur d'autonomie ($RW_3$).

5. Procédé selon l'une quelconque des revendications précédentes,
   **caractérisé en ce que**
   la deuxième valeur d'autonomie ($RW_2$) est pronostiquée via une première fonction d'approximation d'une première précision,
   lorsqu'une durée jusqu'au pronostic pour la deuxième valeur d'autonomie ($RW_2$) dépasse une période prédéfinie,
   la deuxième valeur d'autonomie ($RW_2$) est d'abord pronostiquée via une deuxième fonction d'approximation d'une deuxième précision, la deuxième précision étant inférieure à la première précision,
   la deuxième valeur d'autonomie ($RW_2$) pronostiquée par la deuxième fonction d'approximation est affichée et
   la deuxième valeur d'autonomie ($RW_2$) affichée est remplacée par la deuxième valeur d'autonomie ($RW_2$) calculée par la deuxième fonction d'approximation, lorsque le pronostic à l'aide de la deuxième fonction d'approximation est terminé.

6. Procédé selon l'une quelconque des revendications précédentes,
   **caractérisé en ce que**
   on détermine si une cible d'un itinéraire pourrait être atteinte si la fonction de véhicule (F1 - F5) était activée ou désactivée,
   si on détermine que la cible de l'itinéraire pourrait être atteinte par l'activation ou la désactivation de la fonction de véhicule (F1 - F5), un élément graphique (11) est affiché.

7. Procédé selon l'une quelconque des revendications précédentes,
   **caractérisé en ce que**
   le véhicule (2) présente plusieurs fonctions de véhicule (F1 - F5), au moyen desquelles la première valeur d'autonomie ($RW_1$) peut être modifiée et
   la deuxième valeur d'autonomie ($RW_2$) est pronostiquée et affichée pour chacune desdites plusieurs fonctions de véhicule (F1 - F5).

8. Procédé selon la revendication 7,
   **caractérisé en ce que**
   au moins l'une parmi les plusieurs fonctions de véhicule (F1 - F5) est activée ou désactivée,
   l'influence de la fonction (F2) activée ou désactivée sur les deuxièmes valeurs d'autonomie ($RW_2$) est déterminée pour d'autres fonctions de véhicule (F1, F3, F4, F5),
   les deuxièmes valeurs d'autonomie ($RW_2$) sont nouvellement pronostiquées en fonction de l'influence de la fonction de véhicule (F2) qui est activée ou désactivée et
   les deuxièmes valeurs d'autonomie ($RW_2$) nouvellement pronostiquées sont affichées.

9. Procédé selon la revendication 7 ou 8,
   **caractérisé en ce que**
   les deuxièmes valeurs d'autonomie ($RW_2$) des fonctions de véhicule (F1 - F5) sont triées selon leur grandeur de manière descendante et les deuxièmes valeurs d'autonomie ($RW_2$) triées sont affichées dans une liste (10).

10. Dispositif (1) pour le pronostic d'une modification de l'autonomie par activation ou désactivation d'une fonction de véhicule (F1 - F5) d'un véhicule (2), le véhicule (2) présentant au moins une fonction de véhicule (F1 - F5) qui peut être activée ou désactivée, présentant

une unité de détermination (6), au moyen de laquelle une valeur d'une quantité d'énergie ($E_{bat}$) disponible dans le véhicule (2) peut être déterminée,

une unité de mesure de la température (7), au moyen de laquelle la température environnante (T) du véhicule (2) peut être détectée,

une unité de pronostic (5), au moyen de laquelle

une valeur d'une première quantité d'énergie ($E_1$) qui sera vraisemblablement consommée dans un état de base du véhicule (2) pour un itinéraire déterminé et/ou une durée de trajet déterminée, peut être pronostiquée, une première valeur d'autonomie ($RW_1$) pouvant être pronostiquée à partir de la valeur pronostiquée de la première quantité d'énergie ($E_1$) et de la valeur de la quantité d'énergie ($E_{bat}$) disponible,

une valeur d'une deuxième quantité d'énergie ($E_2$), qui serait consommée ou économisée si la fonction de véhicule (F1 - F5) était activée ou désactivée, peut être pronostiquée, la valeur de la deuxième quantité d'énergie ($E_2$) pouvant être pronostiquée en fonction de la température environnante (T) et

une deuxième valeur d'autonomie ($RW_2$), de laquelle la première valeur d'autonomie ($RW_1$) serait augmentée ou diminuée si la fonction (F1 - F5) est activée ou désactivée, peut être pronostiquée à partir des valeurs de la quantité d'énergie ($E_{bat}$) disponible, de la première quantité d'énergie ($E_1$) et de la deuxième quantité d'énergie ($E_2$),

un dispositif d'affichage (3) et

un dispositif de commande (4), au moyen duquel le dispositif d'affichage (3) peut être commandé de manière telle que les deuxièmes valeurs d'autonomie ($RW_2$) peuvent être affichées sur le dispositif d'affichage (3),

**caractérisé en ce que**

la valeur de la deuxième quantité d'énergie ($E_2$) est pronostiquée via la fonction d'approximation

$$E_2 = a_3 T^2 + a_4 T + a_5$$

dans laquelle $a_3$, $a_4$ et $a_5$ sont des paramètres de la fonction d'approximation, qui sont spécifiques à la fonction de véhicule (F1 - F5) et T est la température environnante (T) du véhicule (2).

**11.** Dispositif (1) selon la revendication 10,
**caractérisé en ce que**
le dispositif (1) comprend une batterie (8) dans laquelle la quantité d'énergie ($E_{bat}$) disponible est accumulée.

**12.** Véhicule (2) comprenant un moteur électrique (9) et un dispositif (1) selon l'une quelconque des revendications 10 ou 11.

FIG. 1

FIG. 2

FIG. 3a

FIG. 3b

FIG. 3c

FIG. 3d

FIG. 3e

FIG. 4

|      | 10.1 | 10.2 |       | 10.3   |
| ---- | ---- | ---- | ----- | ------ |
|      | □    | F1   |       | +12km  |
|      | □    | F2   |       | +10km  |
|      | □    | F3   |       | +4 km  |
|      | □    | F4   |       | +4km   |
|      | □    | F5   |       | +2km   |

10

**FIG. 5a**

|      | 10.1 | 10.2 |       | 10.3   |
| ---- | ---- | ---- | ----- | ------ |
|      | □    | F1   |       | +12km  |
|      | □    | F2   |       | +10km  |
|      | □    | F3   |       | +4 km  |
|      | □    | F4   |       | +2km   |
|      | □    | F5   |       | -2km   |

10

**FIG. 5b**

|      | 10.1 | 10.2 |       | 10.3   |
| ---- | ---- | ---- | ----- | ------ |
|      | □    | F1   |       | +12km  |
|      | □    | F2   |       | +10km  |
|      | □    | F3   |       | +4 km  |
|      | □    | F4   |       | +4km   |
|      | □    | F5   |       | +2km   |

10

**FIG. 6a**

|      | 10.1 | 10.2 |       | 10.3   |
| ---- | ---- | ---- | ----- | ------ |
|      | □    | F1   |       | +9km   |
|      | ☑    | F2   |       | +10km  |
|      | □    | F3   |       | +1 km  |
|      | □    | F4   |       | +1km   |
|      | □    | F5   |       | +2km   |

10

**FIG. 6b**

10.1  10.2        10.3
 ↓     ↓           ↓

| ☐ | F1 | +10km |
| ☐ | F2 | +10km |
| ☐ | F3 | +3 km |
| ☐ | F4 | +3km |
| ☐ | F5 | +5km |

↖ 10

FIG. 7a

10.1  10.2        10.3
 ↓     ↓           ↓

| ☐ | F1 | ★ ★ ★ |
| ☐ | F2 | ★ ★ ★ |
| ☐ | F3 | ★ ★ |
| ☐ | F4 | ★ |
| ☐ | F5 | ★ |

↖ 10

FIG. 7b

10.1  10.2        10.3
 ↓     ↓           ↓

| ☐ | F1 | +12km |
| ☐ | F2 | +10km |
| ☐ | F3 | +4km |
| ☐ | F4 | +2km |
| ☐ | F5 | +4km |

↖ 10

FIG. 7c

10.1  10.2        10.3
 ↓     ↓           ↓

| ☐ | F1 | +12km ⊏• | ⟍ 11 |
| ☐ | F2 | +10km ⊏• | |
| ☐ | F3 | +4km | |
| ☐ | F4 | +2km | |
| ☐ | F5 | +4km | |

↖ 10

FIG. 8

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- DE 102010038539 A1
- DE 102009052853 A1
- DE 102011112382 A1
- US 2012179311 A1
- US 2012179313 A1
- WO 2011031933 A1
- US 2013096818 A1